# EUROPÄISCHE PATENTSCHRIFT

(11) **EP 1 377 193 B1**
(45) Veröffentlichungstag und Bekanntmachung des Hinweises auf die Patenterteilung: **15.06.2005**
(21) Anmeldenummer: 02727503.1
(22) Anmeldetag: 28.03.2002
(51) Int. Cl.: A47J 31/44

(54) **KAFFEEMASCHINE**
COFFEE MACHINE
MACHINE A CAFE

(30) Priorität: 04.04.2001 DE 10116828
(43) Veröffentlichungstag der Anmeldung: 07.01.2004
(73) Patentinhaber: Niro-Plan AG, 4663 Aarburg (CH)
(72) Erfinder: GREIWE, Hansdieter, 97944 Boxberg (DE)
(74) Vertreter: Meissner, Bolte & Partner
(86) Internationale Anmeldenummer: PCT/EP2002/003544
(87) Internationale Veröffentlichungsnummer: WO 2002/080746

(56) Entgegenhaltungen:
- EP-A- 0 309 780
- US-A- 5 211 344
- US-A- 5 312 020

## Beschreibung

Die Erfindung betrifft eine Kaffeemaschine, insbesondere eine Kaffeemaschine für den gewerblichen Bereich, nach dem Oberbegriff des Patentanspruches 1. Eine solche Kaffeemaschine ist aus EP-A- 309 780 bekannt.

Im gewerblichen Bereich werden Espresso- und Filterkaffeemaschinen den Gastronomen zur Verfügung gestellt, die über eine Vielzahl von Funktionen verfügen müssen, um den anspruchsvollen Bedürfnissen der Gäste zu genügen. Diese Vielzahl von Funktionen bedingt auch gleichzeitig die Zurverfügungstellung einer Vielzahl von Aggregaten. Unter derartigen Aggregaten sind mindestens eine, meist aber mehrere Kaffeemühlen zu verstehen, zum Mahlen der Kaffeebohnen - für Espresso andere Kaffeebohnen als für Filterkaffee und möglicherweise beide Bohnenarten auch noch dekoffeiniert oder "normal" -, oder Pumpen für die Erhöhung des meist zu niedrigen Wasserdruckes oder zum Fördern und / oder Aufschäumen von Milch. In vielen Fällen werden auch Antriebseinrichtungen benötigt, um den Filterkuchen abzuräumen oder sonstige "mechanische" Arbeitsgänge zu bewerkstelligen. Hierbei muß einerseits den Anforderungen nach störungsfreiem Dauerbetrieb ebenso Genüge getan werden wie der Forderung nach kompaktem, einfachem und kostengünstigem Aufbau.

Der Erfindung liegt die Aufgabe zugrunde, eine Kaffeemaschine der eingangs genannten Art dahingehend weiterzubilden, daß in einfacher Weise eine Vielzahl von Aggregaten zuverlässig antreibbar ist.

Diese Aufgabe wird durch eine Kaffeemaschine nach dem Patentanspruch 1 gelöst.

Ein wesentlicher Punkt der Erfindung liegt darin, daß ein einziger Antriebsmotor verwendet wird um mehrere Aggregate auch unabhängig voneinander anzutreiben, wobei die Aggregate mindestens eine Kaffeemühle und eine Pumpe umfassen, also zwei voneinander vollständig verschiedenartige Aggregate, die mit ein und demselben Antriebsmotor betrieben werden können. Dieser Antriebsmotor kann dann relativ aufwendig und damit betriebssicher sein, da er für mehrere Aggregate ja nur einmal vorzusehen ist. Man kann hierbei auch in einer "gemischten" Betriebsweise derart arbeiten, daß beispielsweise mehrere Kaffeemühlen gleichzeitig angetrieben (von ihnen jedoch nur eine mit Kaffeebohnen gefüllt) wird und durch die Steuerung wahlweise zu den mehreren, parallelen Kaffeemühlen eine (einzige) Pumpe betrieben wird. Vorzugsweise sind jedoch die Aggregate durch die Steuerung gezielt mit Antriebsenergie versorgbar.

Besonders einfach ist die Anordnung dann, wenn die Getriebeeinrichtungen mindestens zwei in voneinander verschiedenen Richtungen sperrende Freilaufkupplungen umfassen, wobei der Antriebsmotor dann von der Steuerung derart in 2 Drehrichtungen selektiv steuerbar ist, daß je nach Drehrichtung des Antriebsmotors die eine oder die andere Freilaufkupplung sperrt und ein mit ihr verbundenes Aggregat zu dessen Antrieb mit dem Antriebsmotor verbindet. Derartige Freilaufkupplungen sind sehr einfach aufgebaut und zuverlässig. Die Steuereinrichtung kann ebenso einfach aufgebaut sein, da der Antriebsmotor lediglich in seinen Drehrichtungen umzusteuern ist.

Weiterhin ist es möglich, zusätzlich oder alternativ in den Getriebeeinrichtungen durch die Steuerung schaltbare Kupplungen vorzusehen, über welche die Aggregate mit dem Antriebsmotor selektiv verbindbar sind. In Kombination mit der zuvor beschriebenen Ausführungsform ist somit eine Multiplikation der Anzahl von Aggregaten leicht erzielbar.

Bei einer weiteren Ausführungsform der Erfindung umfassen die Getriebeeinrichtungen mindestens zwei bei von einander verschiedenen Drehzahlen einrückende drehzahlabhängige Kupplungen, wobei der Antriebsmotor derart durch die Steuerung steuerbar ist, daß je nach Drehzahl des Antriebsmotors die eine oder die andere drehzahlabhängige Kupplung sperrt und ein mit ihr verbundenes Aggregat zu dessen Antrieb mit dem Antriebsmotor verbindet. Auch hier wird wieder nur der Antriebsmotor von der Steuerung (in diesem Fall in verschiedenen Drehzahlen) gesteuert, so daß sich ein sehr einfacher Aufbau ergibt. Auch diese Ausführungsform der Erfindung läßt sich mit den beiden zuvor beschriebenen Ausfürhungsformen alternativ oder auch gleichzeitig kombinieren, so daß sich eine weitere, sehr einfache Vervielfachung der mit Antriebsenergie zu versorgenden Aggregate ergibt.

Bei einer weiteren Ausführungsform der Erfindung umfassen die Getriebeeinrichtungen mindestens ein Räderumlaufgetriebe mit einem, mit dem Antriebsmotor verbundenen Getriebeeingang und mindesten zwei, jeweils mit einem Aggregat verbundenen Getriebeausgängen, wobei durch die Steuerung schaltbare Bremsen vorgesehen sind, mittels derer die jeweils nicht anzutreibenden Antriebsaggregate gesperrt und damit das anzutreibende Aggregat mit Antriebsenergie versorgt wird. Diese Ausführungsform hat gegenüber der oben beschriebenen Ausführungsform mit schaltbaren Kupplungen den Vorteil, daß Bremsen einfacher (z. B. als magnetisch betätigte Sperrklinken) aufgebaut sein können, als schaltbare Kupplungen. Auch hier besteht wieder die Möglichkeit, diese Ausführungsform der Erfindung mit sämtlichen der zuvor beschriebenen Ausführungsformen (alternativ oder gleichzeitig) zu kombinieren, um eine Vielzahl von Aggregaten getrennt ansteuern zu können.

Bei einer bevorzugten Ausführungsform weist der Antriebsmotor zwei Ausgangswellen auf, wobei an jeder Ausgangswelle (mindestens) ein Aggregat über eine Freilaufkupplung angeschlossen ist. Dadurch erübrigt sich ein gesondertes Verzweigungsgetriebe.

Der Antriebsmotor ist vorzugsweise als Elektromotor ausgebildet, da hier eine besonders leichte Richtungs- und Drehzahlsteuerung in zuverlässiger Weise ermöglicht wird.

Nachfolgend werden bevorzugte Ausführungsformen der Erfindung anhand von Ausführungsbeispielen näher erläutert. Hierbei zeigt:
- Figur 1: eine schematische Darstellung einer 1. Ausführungsform der Erfindung mit zwei Freilaufkupplungen,
- Figur 2: eine 2. Ausführungsform der Erfindung mit zwei Freilaufkupplungen und einem Verzweigungsgetriebe,
- Figur 3: eine 3. Ausführungsform der Erfindung mit Freilaufkupplungen sowie drehzahlabhängigen Kupplungen,
- Figur 4: eine 4. Ausführungsform der Erfindung mit Freilaufkupplungen, Verzweigungsgetriebe und steuerbaren Kupplungen,
- Figur 5: eine 5. Ausführungsform der Erfindung mit Freilaufkupplungen, einem Umlaufgetriebe und Bremsen,
- Figur 6: eine schematisierte Konstruktion einer Ausführungsform mit einem Antriebsmotor mit zwei Ausgangswellen und
- Figur 7: eine Darstellung ähnlich der nach Figur 6, jedoch mit einem Antriebsmotor und einem Verzweigungsgetriebe.

In der nachfolgenden Darstellung werden für gleiche und gleich wirkende Teile dieselben Bezugsziffern verwendet.

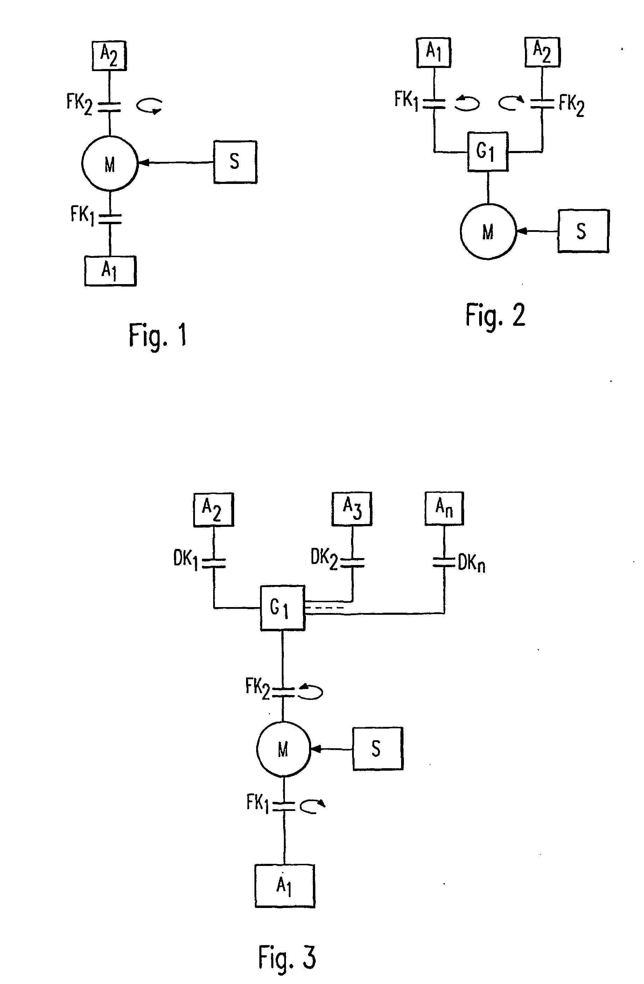

Bei der in Figur 1 gezeigten Ausführungsform ist ein Motor M gezeigt, der über eine Steuerung S links- oder rechtsdrehend steuerbar ist. Der Motor weist zwei Ausgangswellen auf. An jeder der beiden Ausgangswellen ist jeweils eine Freilaufkupplung FK₁ bzw. FK₂ vorgesehen, welche an ihrem jeweiligen Ausgang ein Drehmoment bei linkslaufendem Eingang bzw. rechtslaufendem Eingang zur Verfügung stellt. Die Freilaufkupplungen FK₁ und FK₂ sind jeweils mit einem Aggregat A₁ bzw. A₂ verbunden. Diese Aggregate A₁ bzw. A₂ können z. B. zwei verschiedene Kaffeemühlen (zum Mahlen von Espresso-Bohnen bzw. Brühkaffee-Bohnen) sein, oder aber auch eine Kaffeemühle sowie eine Pumpe zur Erhöhung des Wasserdruckes oder zum Fördern von Milch. Durch diese einfache Anordnung ist gewährleistet, daß mittels eines einzigen Motors zwei Aggregate der Kaffeemaschine mit Antriebsenergie versorgt werden können.
Die Steuerung muß lediglich dazu geeignet sein, den Motor M umzusteuern.

Die in Figur 2 gezeigte Ausführungsform unterscheidet sich von derjenigen in Figur 1 lediglich dadurch, daß der Motor M nur eine Ausgangswelle hat, die auf ein Getriebe G₁ führt, das als Verzweigungsgetriebe mit zwei parallelen Ausgängen ausgebildet, ist, an welchen dann wieder die Antriebsaggregate A₁ und A₂ über jeweils eine Freilaufkupplung FK₁ bzw. FK₂ verbunden sind.

Bei der in Figur 3 gezeigten Ausführungsform ist wieder ein Antriebsmotor mit zwei Ausgängen gezeigt, dessen einer Ausgang über eine erste Freilaufkupplung FK₁ mit einem ersten Antriebsaggregat A₁ und dessen zweite Freilaufkupplung FK₂ (deren Kupplungsrichtung umgekehrt zu derjenigen von FK₁ ist) mit einem Verzweigungsgetriebe G₁ verbunden ist, an dessen Ausgängen parallel ein Drehmoment zur Verfügung steht. Die Ausgänge des Verzweigungsgetriebe G₁ sind über drehzahlabhängige Kupplungen DK₁ bis DKₙ mit den Aggregaten A₂ bis Aₙ verbunden. Die drehzahlabhängigen Kupplungen DKₙ sind nun derart (z. B. in Form von Fliehkraftkupplungen) ausgebildet, daß an ihren Ausgängen nur dann ein Drehmoment zur Verfügung gestellt wird, wenn die Drehzahl einen bestimmten Bereich überschreitet bzw. die Drehzahl innerhalb eines bestimmten Bereiches liegt. Auch bei dieser Ausführungsform muß die Steuerung somit nur den Elektromotor M ansteuern, jedoch in diesem Fall nicht nur hinsichtlich seiner Drehrichtung, sondern auch hinsichtlich seiner Drehzahl. In jedem Fall kommt man aber mit einer einzigen Steuerungsverbindung, nämlich zwischen der Steuerung S und dem Elektromotor M aus, um eine Vielzahl von Antriebsaggregaten selektiv mit Antriebsenergie zu versorgen.

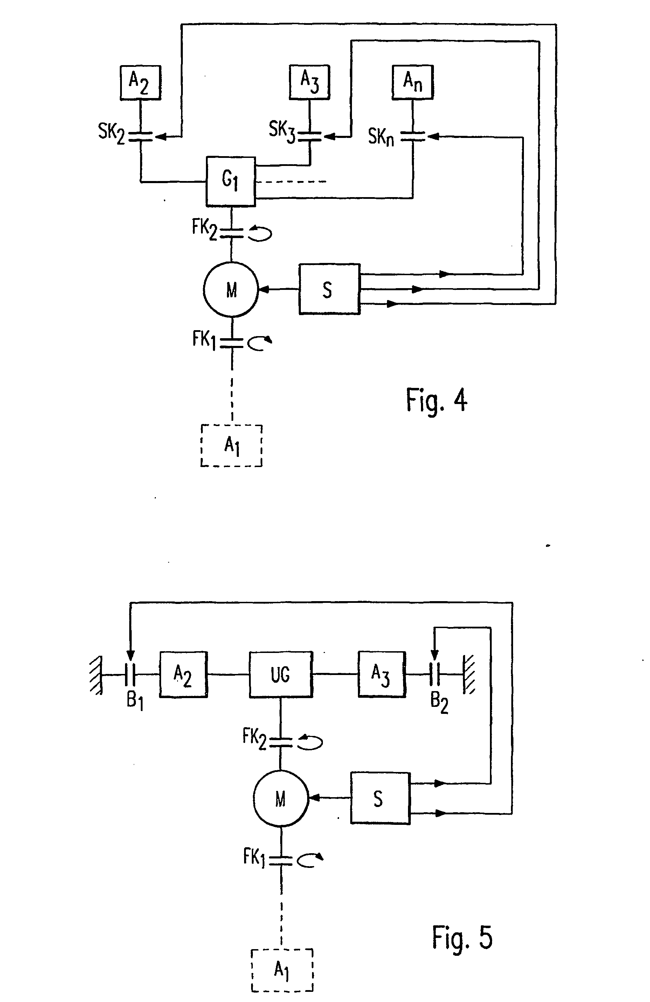

Die in Figur 4 gezeigte Ausführungsform unterscheidet sich von der nach Figur 3 dadurch, daß anstelle der drehzahlabhängigen Kupplungen DKₙ nunmehr steuerbare Kupplungen SK₂ bis SKₙ vorgesehen sind, die jeweils gesondert von der Steuerung S über Steuerleitungen ansteuerbar sind. Bei dieser Anordnung ist es nun möglich, beliebig viele der Aggregate A₂ bis Aₙ unabhängig voneinander, aber auch gleichzeitig, mit Antriebsenergie zu versorgen. Der Vollständigkeit halber ist auch hier wieder der Elektromotor M umsteuerbar und mit Freilaufkupplungen an das Verzweigungsgetriebe G₁ bzw. ein einzeln anzutreibendes Aggregat A₁ gekoppelt gezeichnet.

Die in Figur 5 gezeigte Ausführungsform unterscheidet sich von der nach Figur 4 dadurch, daß anstelle eines einfachen Verzweigungsgetriebes G₁ ein Räderumlaufgetriebe UG vorgesehen ist, das einen Getriebeeingang (dieser ist über eine Freilaufkupplung FK₂ mit dem Antriebsmotor M verbunden) und zwei Getriebeausgänge aufweist. Die Getriebeausgänge sind bei diesem Umlaufgetriebe (z. B. einem einfachen Planetengetriebe) in ihren Drehmomenten voneinander abhängig. Wird der eine Getriebeausgang gesperrt (abgebremst), so steht die gesamte Antriebsleistung am anderen Getriebeausgang zur Verfügung. Diese Ausgänge des Umlaufgetriebes UG sind jeweils mit einem Antriebsaggregat (oder ggf. auch mit mehreren parallel) A₂ bzw. A₃ verbunden. Die Antriebsaggregate A₂ bzw. A₃ sind jeweils mittels einer Bremse B₁ bzw. B₂ blockierbar, wobei die Bremsen von der Steuerung S angesteuert werden. Wird eine der beiden Bremsen B₁ eingerückt, die andere bleibt ausgerückt, so steht bei dem Aggregat A₂ bzw. A₃, das nicht gebremst wird, die gesamte Antriebsenergie zur Verfügung. Derartige Umlaufgetriebe sind bekanntlich mit beliebig vielen Getriebeausgängen herstellbar, so daß beliebig viele Antriebsaggregate A₂ bis An ansteuerbar sind. Diese Ausführungsform hat gegenüber der nach Figur 4 den Vorteil, daß steuerbare Bremsen in besonders einfacher, kompakter und verschleißfester Konstruktion zur Verfügung stehen.

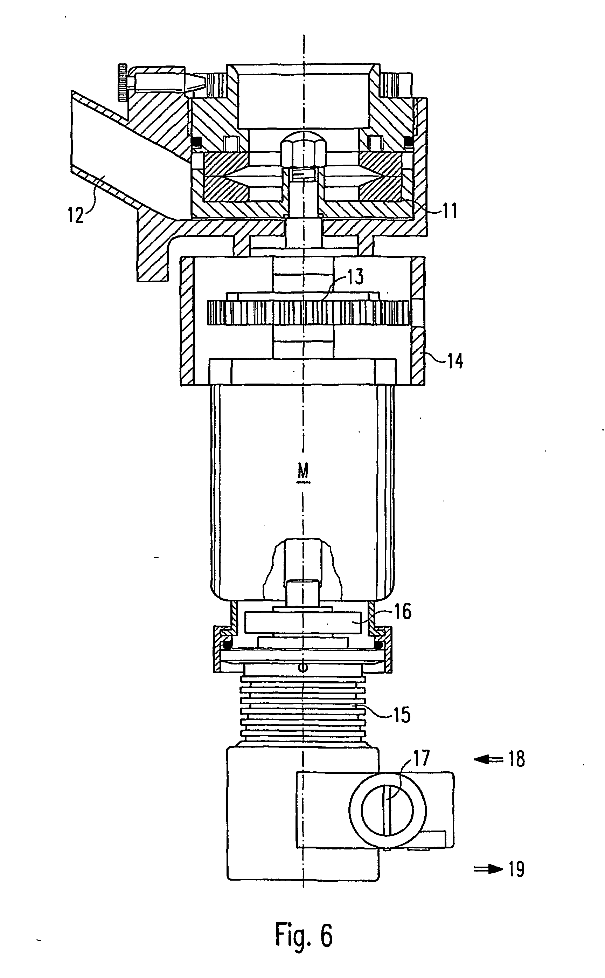

Die in Figur 6 gezeigte Konstruktion entspricht in ihrem Prinzip derjenigen nach Figur 1. Es ist hier ein Antriebsmotor M vorgesehen, dessen Rotorwelle an beiden Enden zugänglich und mit Getriebeelementen verbindbar ist. Bei der in Figur 6 gezeigten Ausführungsform sitzt am oberen Ende des Antriebsmotors M ein Getriebegehäuse 14, das einen linkslaufenden Freilauf 13 beinhaltet, an dessen Ausgangswelle eine Kaffeemühle 11 angekoppelt ist, über deren Bohnenzufuhr 23 Kaffeebohnen zugeführt und das Kaffeemehl über ein aufsteckbares Blasrohr ausgeworfen werden kann.

Am unteren Ende des Antriebsmotors M ist eine Flüssigkeitsdruckpumpe über einen rechtslaufenden Freilauf 16 in einem Getriebegehäuse angeflanscht, deren Saugleitung 18 und Druckleitung 19 z. B. mit einer Wasserzufuhr und einem Getränkebereiter-Kreislauf verbunden sind.

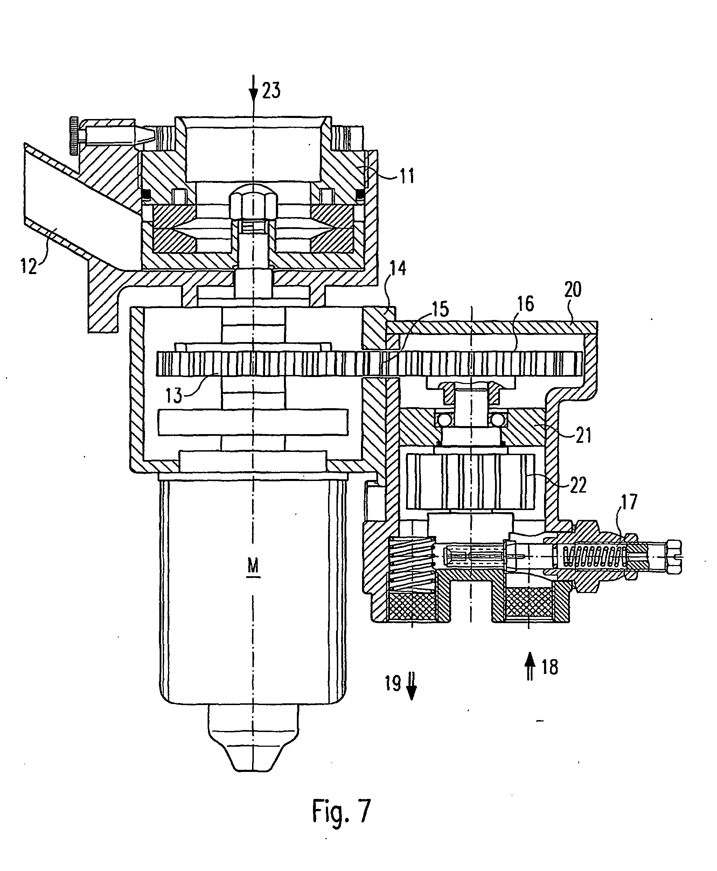

Die in Figur 7 gezeigte Konstruktion entspricht dem Prinzip nach Figur 2 und unterscheidet sich von derjenigen nach Figur 6 dadurch, daß der Antriebsmotor lediglich eine einzige Antriebswelle aufweist. In dem Getriebegehäuse 14 sind das (in Figur 2 gezeigte) Verzweigungsgetriebe G₁ und gleichzeitig der Freilauf 13 zum Antrieb der Kaffeemühle 11 vorgesehen. An das Getriebegehäuse 14 ist ein weiteres Getriebegehäuse mit einem Deckel 20 angeflanscht, welches ein mit dem Antrieb für die Kaffeemühle 11 bzw. dessen Freilauf 13 kämmendes Zahnrad mit Freilauf 16 (rechtslaufend) aufweist, das über eine Lagereinheit 21 Pumpenlamellen 22 zum Fördern eines fluiden Mediums (z. B. Wasser, Milch oder Luft) antreibt. In an sich bekannter Weise ist auch hier wieder ein Druckregulierventil 17 vorgesehen.

Aus obiger Beschreibung ergibt sich, daß eine Vielzahl von Antriebsaggregaten mittels eines einzigen Motors mit Antriebsenergie wahlweise oder auch gleichzeitig versorgt werden kann, wodurch eine so ausgestattete Kaffeemaschine kleinbauend aber dennoch zur Erfüllung einer Vielzahl von Funktionen geeignet aufgebaut werden kann.

### Bezugszeichenliste

- 11: Kaffeemühle
- 12: Ausblasrohr
- 13: Freilaufkupplung linkslaufend
- 14: Getriebegehäuse
- 15: Pumpe
- 16: Freilaufkupplung rechtslaufend
- 17: Druckventil
- 18: Saugleitung
- 19: Druckleitung
- 20: Deckel
- 21: Lagereinheit
- 22: Pumpenlamellen
- 23: Bohnenzufuhr
- M: Antriebsmotor
- A: Aggregat
- FK: Freilaufkupplung
- G1: Verzweigungsgetriebe
- DK: drehzahlabhängiges Getriebe
- SK: Schaltkupplung
- UG: Umlaufgetriebe
- S: Steuerung
- B: Bremse

## Patentansprüche

1. Kaffeemaschine, insbesondere für den gewerblichen Bereich, mit Antriebseinrichtung zum Antreiben von Pumpeinrichtungen (15), Fördereinrichtungen, Kaffeemühlen (11) oder dergleichen anzutreibenden Aggregaten (A₁ bis Aₙ), wobei
die Antriebseinrichtungen einen Antriebsmotor (M) sowie Getriebeeinrichtungen (G FK, SK, DK, UG, B) umfassen, welche derart ausgebildet und mit mindestens zwei Aggregaten (A₁ bis Aₙ) zu deren Antrieb verbunden sind, dass In Abhängigkeit vom Zustand einer Steuerung (S) die Aggregate (A₁ bis Aₙ) wahlweise antreibbar sind,
**dadurch gekennzeichnet, dass**
die Aggregate (A₁ bis Aₙ) mindestens eine Kaffeemühle (11) und eine Pumpe (15) umfassen.

2. Kaffeemaschine nach Anspruch 1,
**dadurch gekennzeichnet, daß**
die Getriebeeinrichtungen mindestens zwei, in voneinander verschiedenen Richtungen sperrende Freilaufkupplungen (FK₁, FK₂) umfassen, und daß der Antriebsmotor (M) derart durch die Steuerung (S) steuerbar ist, daß je nach Drehrichtung des Antriebsmotors (M) die eine oder die andere Freilaufkupplung (FK₁, FK₂) sperrt und ein mit ihr verbundenes Aggregat (A₁ bis Aₙ) zu dessen Antrieb mit dem Antriebsmotor (M) verbindet.

3. Kaffeemaschine nach einem der vorhergehenden Ansprüche,
**dadurch gekennzeichnet, daß**
die Getriebeeinrichtungen durch die Steuerung (S) schaltbare Kupplungen (SK₁, SKₙ) umfassen.

4. Kaffeemaschine nach einem der vorhergehenden Ansprüche,
**dadurch gekennzeichnet, daß**
die Getriebeeinrichtungen mindestens zwei, bei voneinander verschiedenen Drehzahlen einrückende, drehzahlabhängige Kupplungen (DK₁, DKₙ) umfassen, und daß der Antriebsmotor (M) derart durch die Steuerung (S) steuerbar ist, daß je nach Drehzahl des Antriebsmotors (M) die eine oder die andere drehzahlabhängige Kupplung (DK₁, DKₙ) sperrt und ein mit ihr verbundenes Aggregat (A₁ bis Aₙ) zu dessen Antrieb mit dem Antriebsmotor (M) verbindet.

5. Kaffeemaschine nach einem der vorhergehenden Ansprüche,
**dadurch gekennzeichnet, daß**
die Getriebeeinrichtungen mindestens ein Räderumlaufgetriebe (UG) mit einem, mit dem Antriebsmotor (M) verbundenen Getriebeeingang und mindestens zwei, jeweils mit einem Aggregat (A₂, A₃) verbundenen Getriebeausgängen umfassen, und daß durch die Steuerung (S) schaltbare Bremsen (B₁, B₂) zum Bremsen der nicht anzutreibenden Antriebsaggregate (A₂, A₃) vorgesehen sind.

6. Kaffeemaschine nach einem der vorhergehenden Ansprüche, insbesondere nach Anspruch 2,
**dadurch gekennzeichnet, daß**
der Antriebsmotor (M) zwei Ausgangswellen aufweist und an jeder Ausgangswelle ein Aggregat (A₁, A₂) über eine Freilaufkupplung (FK₁, FK₂) angeschlossen ist.

7. Kaffeemaschine nach einem der vorhergehenden Ansprüche,
**dadurch gekennzeichnet, daß**
der Antriebsmotor (M) ein Elektromotor ist.

## Claims

1. A coffee machine, in particular for the commercial sector, with a drive device for driving pump means (15), feed means, coffee grinders (11) or similar units (A₁ to Aₙ) to be driven, wherein
the drive means comprise a drive motor (M) and transmission means (G,FK,SK,DK,UG,B) which are so designed and connected to at least two units (A₁ to Aₙ) for the drive thereof that depending on the condition of a control system (S) the units (A₁ to Aₙ) can be optionally driven,
**characterised in that in that**
the units (A₁ to Aₙ) comprise at least one coffee grinder (11) and one pump (15).

2. A coffee machine according to Claim 1,
**characterised in that** the transmission means comprise at least two freewheel couplings (FK₁, FK₂) which block in different directions from one another, and **in that** the drive motor (M) can be so controlled by the control system (S) that, depending on the direction of rotation of the drive motor (M), one or other freewheel coupling (FK₁, FK₂) blocks and connects a unit (A₁ to Aₙ) connected therewith for its drive by the drive motor (M).

3. A coffee machine according to one of the preceding Claims, **characterised in that** the transmission means comprise couplings (SK₁, SKₙ) which can be controlled by the control system (S).

4. A coffee machine according to any of the preceding Claims, **characterised in that** the transmission means comprise at least two speed-dependent couplings (DK₁, DKₙ) which are engaged at different speeds of rotation, and **in that** the drive motor (M) can be controlled by the control system (S) in such a way that, depending on the speed of rotation of the drive motor (M), one or other speed-dependent coupling (DK₁,DKₙ) blocks and connects a unit (A₁ to Aₙ) connected therewith for its drive by the drive motor (M).

5. A coffee machine according to any of the preceding Claims, **characterised in that** the transmission means comprise at least one epicyclic gearing (UG) with a transmission input connected with the drive motor (M) and at least two transmission outputs each connected with a unit (A₂, A₃), and **in that** brakes (B₁, B₂), which can be controlled by the control system (S), are provided for braking the drive units (A₂, A₃) not to be driven.

6. A coffee machine according to any of the preceding Claims, in particular according to Claim 2, **characterised in that** the drive motor (M) has two output shafts and a unit (A₁, A₂) is connected to each output shaft via a freewheel coupling (FK₁, FK₂).

7. A coffee machine according to any of the preceding Claims, **characterised in that** the drive motor (M) is an electric motor.

## Revendications

1. Machine à café, en particulier pour le secteur professionnel, comportant des dispositifs d'entraînement pour l'actionnement de dispositifs de pompe (15), de dispositifs d'alimentation, de moulins à café (11) ou de groupes similaires (A₁ à Aₙ) à actionner, les dispositifs d'entraînement comportant un moteur d'entraînement (M), ainsi que des dispositifs de transmission (G, FK, SK, DK, UG, B), qui sont conçus et reliés à au moins deux groupes (A₁ à Aₙ) pour l'actionnement de ceux-ci de telle sorte que, en fonction de l'état d'une commande (S), les groupes (A₁ à Aₙ) peuvent être actionnés au choix, **caractérisée en ce que** les groupes (A₁ à Aₙ) comportent au moins un moulin à café (11) et une pompe (15).

2. Machine à café selon la revendication 1, **caractérisée en ce que** les dispositifs de transmission comportent au moins deux embrayages à roue libre (FK₁, FK₂), bloquant dans des sens différents l'un de l'autre, et que le moteur d'entraînement (M) peut être actionné par la commande (S) de telle sorte que, en fonction du sens de rotation du moteur d'entraînement (M), l'un ou l'autre embrayage à roue libre (FK₁, FK₂) bloque et relie au moteur d'entraînement (M) un groupe (A₁ à Aₙ) qui lui est relié pour l'actionnement de celui-ci.

3. Machine à café selon l'une des revendications précédentes, **caractérisée en ce que** les dispositifs de transmission comportent des embrayages (SK₁, SKₙ) embrayables par la commande (S).

4. Machine à café selon l'une des revendications précédentes, **caractérisée en ce que** les dispositifs de transmission comportent au moins deux embrayages (DK₁, DKₙ) dépendant de la vitesse de rotation, embrayant à des vitesses de rotation différentes l'une de l'autre, et que le moteur d'entraînement (M) peut être commandé par la commande (S) de telle sorte que, en fonction de la vitesse de rotation du moteur d'entraînement (M), l'un ou l'autre embrayage (DK₁, DK₂) dépendant de la vitesse de rotation bloque et relie au moteur d'entraînement (M) un groupe (A₁ à Aₙ) qui lui est relié pour l'actionnement de celui-ci.

5. Machine à café selon l'une des revendications précédentes, **caractérisée en ce que** les dispositifs de transmission comportent au moins un engrenage planétaire (UG) ayant une entrée d'engrenage reliée au moteur d'entraînement (M) et au moins deux sorties d'engrenage reliées chacune à un groupe (A₂, A₃), et que des freins (B₁, B₂) activables par la commande (S) sont prévus pour freiner les groupes d'entraînement (A₂, A₃) qui ne doivent pas être actionnés.

6. Machine à café selon l'une des revendications précédentes, en particulier selon la revendication 2, **caractérisée en ce que** le moteur d'entraînement (M) comporte deux arbres de sortie et qu'un groupe (A₂, A₃) est raccordé à chaque arbre de sortie par l'intermédiaire d'un embrayage à roue libre (FK₁, FK₂).

7. Machine à café selon l'une des revendications précédentes, **caractérisée en ce que** le moteur d'entraînement (M) est un moteur électrique.
